# EUROPEAN PATENT SPECIFICATION

(11) **EP 3 214 941 B1**
(45) Date of publication and mention of the grant of the patent: **22.08.2018**
(21) Application number: 15797619.2
(22) Date of filing: 04.11.2015
(51) Int. Cl.: A23C 1/12, B01D 9/00, C07H 1/06

(54) **METHOD OF CRYSTALLIZING LACTOSE FROM AN AQUEOUS SOLUTION**
VERFAHREN ZUR KRISTALLISIERUNG VON LACTOSE AUS EINER WÄSSRIGEN LÖSUNG
PROCÉDÉ DE CRISTALLISATION D' -LACTOSE DANS UNE SOLUTION AQUEUSE

(30) Priority: 04.11.2014 DK 201400639
(43) Date of publication of application: 13.09.2017
(73) Proprietor: Spx Flow Technology Danmark A/S, 2860 Søborg (DK)
(72) Inventor: WAGNER, Peter, DK- 2970 Hørsholm (DK)
(74) Representative: Nordic Patent Service A/S
(86) International application number: PCT/EP2015/075700
(87) International publication number: WO 2016/071397

(56) References cited:
- WO-A1-2012/007445
- CA-A- 687 780
- JP-A- 2004 033 951
- US-A1- 2014 051 850

## Description

### FIELD

The present invention relates to methods of crystallizing α-lactose as α-lactose monohydrate from an aqueous solution having improved crystallization rate, in which selectively used mutarotation is beneficial.

### BACKGROUND

Lactose is an important by-product of the dairy industry with many important uses such as infant nutrition and in pharmaceutical products. It is a water soluble molecule present naturally in milk wherein it makes up 2-8% of the milk by weight.

Lactose in aqueous solution has two anomeric forms, α-lactose and β-lactose which in solution are dynamically in equilibrium and can mutarotate to maintain their equilibrium.

In general, crystals of α-lactose (correctly α-lactose monohydrate) are obtained from aqueous solution by crystallization. In aqueous solution the α-form is less soluble than the β-form at a given temperature below approximately 93°C and the α-form reaches the point of supersaturation first and forms crystals of α-lactose monohydrate when crystallized from aqueous solution. Throughout the present disclosure no distinguishing will be made between crystals of α-lactose and crystals of α-lactose monohydrate, as the resulting product of crystallization from aqueous solution is always the α-lactose monohydrate crystal form.

The removal of α-lactose from solution due to crystallization means that the proportion between α- and β-lactose changes, so that the solution contains more β-lactose than corresponding to their equilibrium. However, due to mutarotation the content of α-lactose is continuously replenished, thereby maintaining supersaturation and enabling crystallization to continue. This process will continue as long as the solution is supersaturated and will not stop until the saturation point is reached.

In the field of crystallization of α-lactose from aqueous solutions it is generally known that the currently chosen operating parameters, such as the temperature profile during crystallization, is a compromise between mutarotation rate (β- to α-lactose), crystallization rate and solubility of α-lactose. In general, crystallization is favored by low temperatures approaching 0°C, which reduces the solubility of α-lactose, but such low temperatures reduce mutarotation and crystallization rates significantly. Accordingly, it is common for aqueous solutions comprising lactose to reside in crystallization tanks for more than 20 hours in order to yield significant amounts of crystallized α-lactose. This increases the number of crystallization tanks necessary in a production plant to guarantee the necessary production capacity which again requires high investments and factory footprint. Another drawback of the prior art methods of crystallization is difficult crystal size control.

Many attempts have been made to overcome the limitations of the current methods of crystallizing α-lactose from aqueous solution, but so far no single method has provided a combined solution to the problem of improved crystal quality, increased yield and reduced residence time in the crystallization tanks.

WO 2012/047122 A1 describes a method of crystallizing lactose from a lactose-containing liquid comprising the steps of providing a lactose containing liquid comprising less than 80% by weight total solids, providing an evaporator system that comprises a heat exchanger and an evaporation vessel, the heat exchanger comprising a tube or tubes that define a flowpath having an inlet and an outlet, heating the lactose containing liquid in the heat exchanger to about 50 to about 90°C such that the lactose-containing liquid passes along the flowpath by forced circulation or thermo-siphoning, concentrating the lactose-containing liquid in the evaporation vessel, to generate crystallized lactose in the lactose-containing liquid in the evaporator system. Due to the high concentration levels of lactose in the evaporation vessel, α-lactose will precipitate more rapidly when transferred to a crystallization tank for crystallizing α-lactose at a temperature from 8°C to 25°C but at an increase energy cost of evaporation.

Accordingly, there is a need in the art for an improved method of crystallizing α-lactose from aqueous solution. To this purpose, the present inventor suggests a method of improving the mutarotation rate from β- to α-lactose during crystallization whereby residence time in a crystallization tank can be reduced and the yield of α-lactose increased.

### SUMMARY OF THE INVENTION

The invention is described in detail in the claims and in the description below.

Accordingly, there is disclosed in a first aspect of the present invention; a method of crystallizing α-lactose monohydrate from an aqueous solution comprising dissolved α-lactose and β-lactose, said method comprising: circulating a first volume of said aqueous solution in a mutarotation loop in a mutarotation loop system (100); said mutarotation loop system comprising: a crystallization tank (110) operating at a crystallization temperature, T_{cryst}, from about 0°C to about 30°C for crystallizing α-lactose from said aqueous solution, said crystallization tank comprising a second volume of said aqueous solution, said second volume larger than said first volume, preferably much larger than said first volume; a mutarotation tank (130) operating at a mutarotation temperature, Tₘᵤₜₐ, from about 30°C to about 110°C for promoting mutarotation of β-lactose to α-lactose; a heater (120) for heating said first volume from said crystallization temperature, T_{cryst}, to said mutarotation temperature, Tₘᵤₜₐ; a cooler (140) for cooling said first volume from said mutarotation temperature, Tₘᵤₜₐ, to said crystallization temperature, T_{cryst}; and at least one circulating means (150) for circulating said first volume in said mutarotation loop system (100) from said crystallization tank (110) to said heater (120) to said mutarotation tank (130) to said cooler (140) and back to said crystallization tank (110); wherein said mutarotation tank (130) is operated under iso-volumetric conditions; and said first volume is retained in said mutarotation tank (130) for a mutarotation time, τₘᵤₜₐ, of less than about 1 hour.

According to a second embodiment of the first aspect there is disclosed a method of said first aspect wherein said first volume is retained in said crystallization tank (110) for a retention time, τ_{cryst}, of less than about 32 hours; retained in said heater (120) for a heating time, τₕₑₐₜ, of less than about 30 minutes; retained in said cooler (140) for a cooling time, τ_{cool}, for less than about 30 minutes; and wherein said retention time, τ_{cryst}, said heating time, τₕₑₐₜ, and said cooling time, τ_{cool}, are independently variable.

According to a third embodiment of the first aspect there is disclosed a method according to any of the previous embodiments and aspects, wherein seed crystals of α-lactose monohydrate is added to said second volume of said aqueous solution in said crystallizing tank (110).

According to a fourth embodiment of the first aspect there is disclosed a method according to any of the previous embodiments and aspects, wherein said at least one circulating means (150) operates continuously or discontinuously.

According to a fifth embodiment of the first aspect there is disclosed a method according to any of the previous embodiments and aspects; wherein said first volume is circulated in said mutarotation loop system (100) at a circulation rate of said first volume in said mutarotation loop system (100) from 15 to 400 volume % per hour of said second volume.

According to a sixth embodiment of the first aspect there is disclosed a method according to any of the previous embodiments and aspects; wherein crystallized α-lactose monohydrate formed in said crystallizing tank (110) is removed continuously or discontinuously.

According to a seventh embodiment of the first aspect there is disclosed a method according to any of the previous embodiments and aspects; wherein a third volume of said aqueous solution depleted or nearly depleted of lactose is removed from said mutarotation loop system (100) and replaced by an equal volume enriched in lactose.

According to an eight embodiment of the first aspect there is disclosed a method according to any of the previous embodiments and aspects; wherein said third volume is removed by filtration, preferably by nanofiltration.

According to a ninth embodiment of the first aspect there is disclosed a method according to any of the previous embodiments and aspects; wherein heating and mutarotation, or heating and mutarotation and cooling, or mutarotation and cooling, is executed in a single process unit, preferably in a single heat exchanger.

According to a tenth embodiment of the first aspect there is disclosed a method according to any of the previous embodiments and aspects; wherein cooling and crystallization is executed in a single process unit, preferably in a single crystallization tank.

According to an eleventh embodiment of the first aspect there is disclosed a method according to any of the previous embodiments and aspects; wherein said method of crystallization α-lactose monohydrate is a method of increasing a yield of crystallized α-lactose monohydrate, and/or a method of increasing a crystallization rate for crystallizing α-lactose monohydrate, and/or a method of increasing crystal quality of crystallized α-lactose monohydrate, and/or a method of increasing crystal size homogeneity of crystallized α-lactose monohydrate.

According to a second aspect of the present invention; there is disclosed a mutarotation loop system (100) comprising a crystallization tank (110), a mutarotation tank (130), a heater (120), a cooler (140), at least one circulating means (150) for circulating an aqueous solution comprising α-lactose and β-lactose in said mutarotation loop system (100); and a controller configured for executing a method according to any of the embodiments of said first aspect.

According to a second embodiment of said second aspect; there is disclosed the mutarotation loop system of said second aspect, wherein either said heater (120) and said mutarotation tank (130), or said heater (120) and said mutarotation tank (140) and said cooler (140), is a single process unit, preferably a single heat exchanger.

According to a third embodiment of said second aspect; there is disclosed the mutarotation loop system of said second aspect; wherein said crystallizing tank (110) and said cooler (140) is a single process unit, preferably a single crystallization tank.

According to a fourth embodiment of said second aspect; there is disclosed the mutarotation loop system of said second aspect and said second embodiment of said second aspect; wherein said heater (120) and said mutarotation tank (130) is a single process unit, preferably a single heat exchanger.

According to a fifth embodiment of said second aspect; there is disclosed the mutarotation loop system according to said second aspect and said second to fourth embodiments of said second aspect; further comprising crystal separation means (160), preferably a centrifuge, a hydrocyclone, and/or membrane filters, in particular microfiltration filters.

According to a sixth embodiment of said second aspect; there is disclosed the mutarotation loop system according to said second aspect and said second to fifth embodiments of said second aspect; further comprising liquid removing means (170), preferably a nanofilter (180), and liquid adding means (190).

Further methods and embodiments of the invention are described below.

### BRIEF DESCRIPTION OF THE DRAWINGS

Figure 1: Diagram of the method of the invention indicating relevant process parameters.
Figure 2: Component diagram of a mutation loop system according to the invention.
Figure 3: Proof of concept.
Figure 4: Phase-diagram / mutarotation curve.

### DETAILED DESCRIPTION

At the core of the present invention stands the inventor's realization that an increase in the crystallization rate of α-lactose can surprisingly be achieved by separating physically the step of mutarotating β-lactose to α-lactose from the step of crystallizing α-lactose monohydrate from an aqueous solution which is supersaturated in α-lactose.

To this purpose there is disclosed a combined crystallization and mutarotation process as disclosed in the claims and in the text below. When followed, a mutarotation loop is established which will increase the crystallization rate of the system and improve crystal quality and crystal yield.

Below the invention is described in further detail with reference to the figures.

With the invention there is disclosed a method of crystallizing α-lactose monohydrate from an aqueous solution comprising dissolved α-lactose and β-lactose, said method comprising circulating a first volume of the aqueous solution comprising dissolved α-lactose and β-lactose in a mutarotation loop in a mutarotation loop system (100) wherein the mutarotation loop system (100) comprises a crystallization tank (110), a heater (120), a mutarotation tank (130) and a cooler (140); and wherein the mutarotation tank (130) is operated under iso-volumetric conditions; and the first volume is retained in the mutarotation tank (130) for a mutarotation time, τₘᵤₜₐ, of less than about 1 hour.

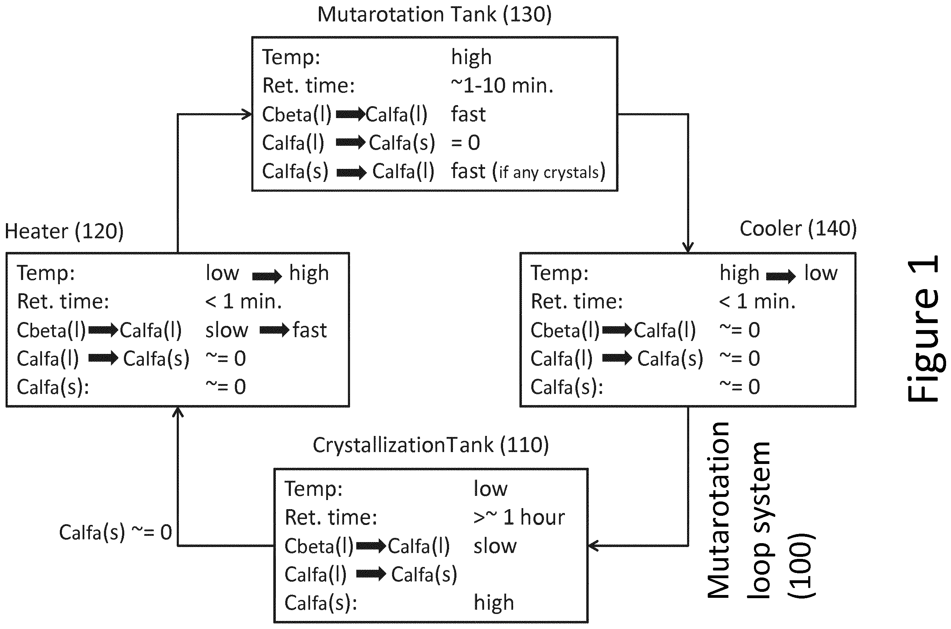

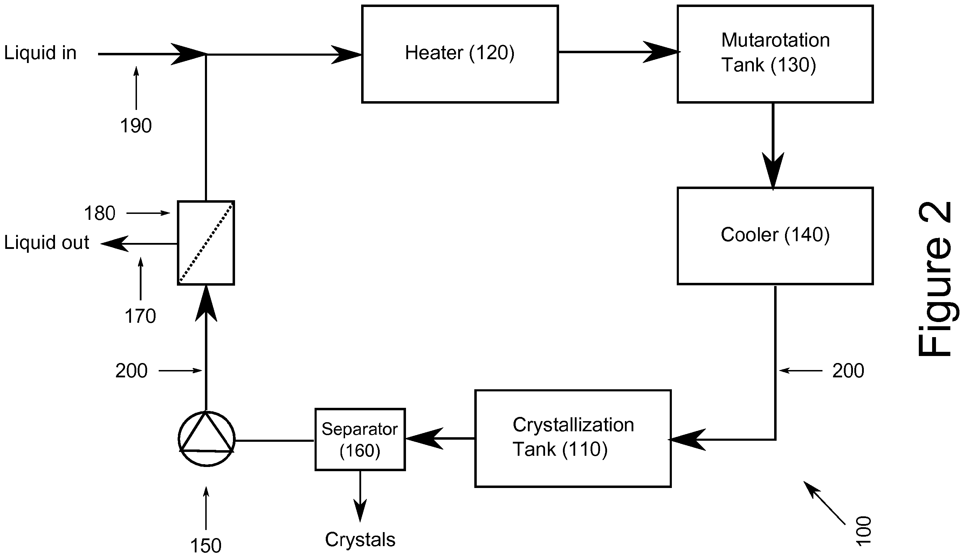

Figure 1 shows a flow diagram for the method of the invention indicating relevant process parameters, while Figure 2 displays a component diagram of a mutation loop system (100) according to one possible embodiment of the invention. The actual position of the components of the mutation loop system (100) within the mutation loop system (100) may vary as detailed in the description.

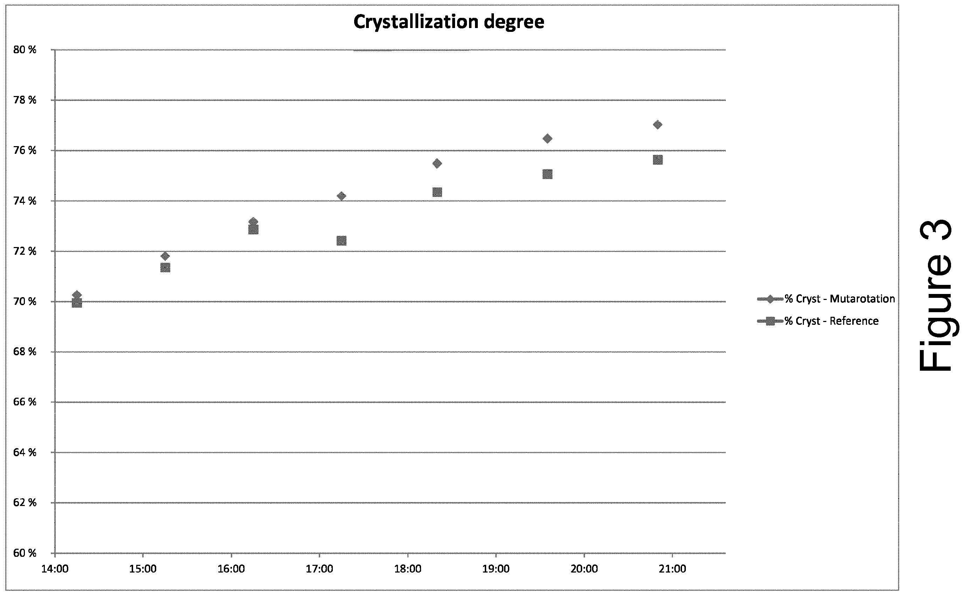

Figure 3 discloses results from a proof of concept study, showing the effect of the mutarotation loop method of the present invention.

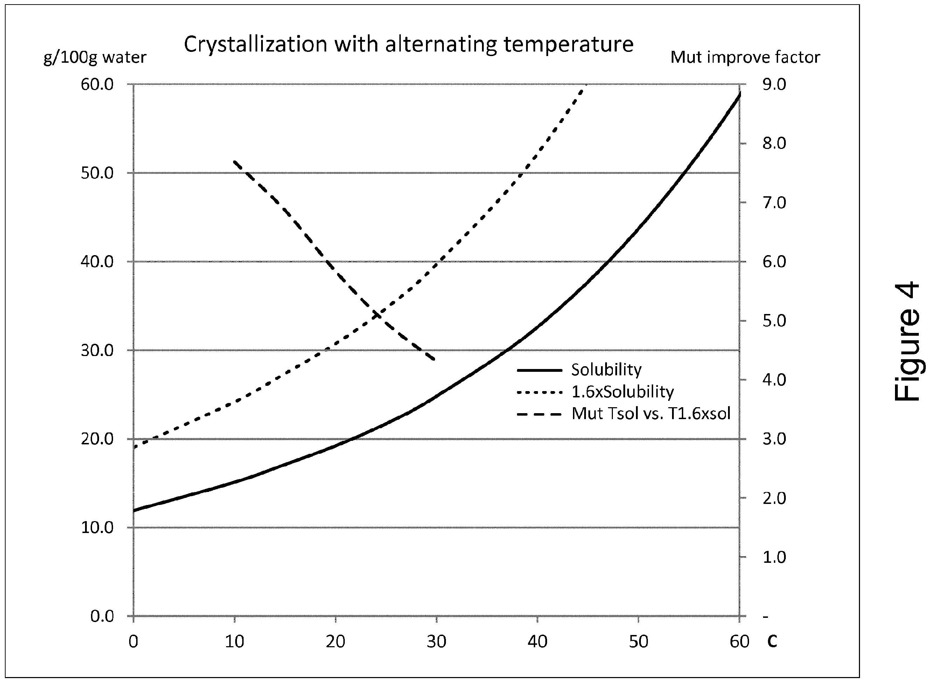

Figure 4 discloses general results of the mutarotation loop. The dashed curve show how much faster the mutarotation process will go if a solution of lactose which is 60% supersaturated (dotted curve) is heated up to the temperature where this solution will be at the saturation point (full curve). As an example a solution with 30 g lactose per 100 g water will at approx. 19°C be super saturated by 60% (dotted curve). If this solution is heated up to approx. 37°C, then it will be at the saturation point (full curve). Mutarotation at 37°C will be approx. 6 times faster than mutarotation at 19°C (dashed curve).

In Figure 1 and starting from the crystallization tank (110), the temperature is low and the aqueous solution comprises dissolved α-lactose at a mass concentration C_{α}(1) and β-lactose at a mass concentration C_{β}(1). If the solution is supersaturated with α-lactose at the given low temperature, crystals of α-lactose will form and the mass concentration of solid α-lactose C_{α}(s) will increase. At the low temperature, mutarotation of β-lactose to α-lactose is slow while precipitation rate of α-lactose is dependent on the availability of α-lactose for crystallization.

A first volume of aqueous solution is now removed from the crystallization tank (110) and transferred to a heater (120) for heating the solution from a low temperature to a higher temperature, labelled high. The solution stays in the heater (120) for a given retention time and the mutarotation rate from β-lactose to α-lactose begins to increase. Due to the raised temperature and resulting subsaturation of the solution with α-lactose, any crystals of α-lactose present will start to dissolve.

Once the heater (120) has heated the solution to the high temperature, it is transferred to a mutarotation tank (130) where it is retained for a given retention time during which rapid mutarotation of β-lactose to α-lactose is effectuated and any crystals of α-lactose still present will dissolve. This increases the concentration of α-lactose and decreases that of β-lactose rapidly.

After mutarotation has been effectuated, the solution is transferred to a cooler (140) and retained therein for a given retention time to cool the solution from the high temperature to the low temperature, prior to re-uniting the solution with the crystallization tank (110). If the cooling is effectuated sufficiently rapidly, no significant changes to the concentrations of α-lactose or β-lactose are observed and essentially no crystals of α-lactose are formed.

For practicality and ease of discussion, the aforementioned mutarotation loop shall be considered to comprise the heater (120), the mutarotation tank (130) and the cooler (140), which with the crystallization tank (110) forms said mutarotation loop system (100). However, this definition is not intended as limiting the system but shall merely serve to guide the discussion of the invention in the present disclosure.

It is common in the prior art to concentrate the lactose in solution by evaporation at elevated temperatures. Thereby mutarotation takes place simultaneously with evaporation and equilibrium between α-lactose and β-lactose at an elevated temperature is reached, typically at boiling temperatures, e.g. under vacuum and at temperatures of about 70-75°C. Then, when the concentrated solution is transferred to a crystallization tank, rapid and uncontrolled formation of α-lactose is initially observed with poorer crystal quality as a result. This e.g. is unfortunate for pharmaceutical purposes.

The current inventor has now surprisingly discovered that the crystal quality can be increased (while at the same time increasing crystallization rate and crystal yield) by diminishing the volume fluctuations in the crystallization tank while operating the mutarotation loop under iso-volumetric conditions, i.e. keeping the total volume of the aqueous solution comprising α-lactose and β-lactose contained in the mutarotation system essentially constant.

The mutarotation loop system (100) further comprises at least one circulating means (150) for circulating the mentioned first volume in a mutarotation loop in the mutarotation loop system (100) from the crystallization tank (110) to the heater (120) to the mutarotation tank (130) to the cooler (140) and back to the crystallization tank (110).

As such, no particular limits are placed on the at least one circulation means (150) in the method. Preferably the first volume is circulated continuously, e.g. by pumping, but the method is equally useful when circulation is executed as a batch process in discontinuous steps or as a combination of continuous and/or discontinuous processes. When pumped, the at least one circulation means (150) may be placed in the mutarotation loop system (100) at the discretion of the skilled person according to the specific needs of the production plant build for the execution of the present method.

The crystallization tank (110) comprises an inner space which can hold a second volume of the aqueous solution which is larger than the first volume which is circulated in the mutarotation loop, preferably the second volume is much larger that the first volume. Thereby is achieved that the volume contained in the crystallization tank (110) during operation of the mutarotation loop is essentially constant and that the crystallization processes will not be significantly disturbed by volume fluctuations. Some volume fluctuations are permissible, even larger fluctuations, but crystal quality may thereby become negatively influenced. The crystallization tank (110) is of conventional design as is known in the art of crystallizing α-lactose and may in particular comprise agitation means, such as a stirrer.

The crystallization tank (110) during mutarotation operates at a crystallization temperature, T_{cryst}, from about 0°C to about 30°C. Prior to initiation of the mutarotation loop, the crystallization tank may operate at higher temperatures. As is known in the art, a low crystallization temperature benefits the formation of α-lactose monohydrate and the skilled person will know how to optimize the crystallization temperature in accordance with the knowledge of the field. Preferably, the crystallization temperature, T_{cryst}, is from above 0°C to below 30°C, more preferably between 5°C to 25°C with 5°C to 15°C being optimal.

The mutarotation tank (130) operates at a mutarotation temperature, Tₘᵤₜₐ, from about 30°C to about 110°C for promoting mutarotation of β-lactose to α-lactose.

In Table 1 solubility and reaction rate parameters are given for α- and β-lactose for the temperature interval from 0°C to 100°C. It can be seen from the table that the ratio of β-lactose to α-lactose at equilibrium decreases linearly with temperature, whereas the mutation rate of β-lactose to α-lactose is accelerated by increasing the temperature above 30°C. Also the crystallization of lactose is favored when the temperature is below 30°C in the crystallization tank and hence it is preferable to keep the crystallization temperature below 30°C and the mutarotation temperature above 30°C.

When implementing a mutarotation temperature, the skilled person can be guided by the values of Table 1. As can be seen from the table, once 40°C is reached mutarotation approaches its maximum rate and above 60°C conversion is very fast and no longer reaction rate limited. As such, retention times of 1 hour are not necessary already when the temperature reaches 40°C.

Upwards in a closed or iso-volumeteric system mutarotation temperatures may exceed 100°C and a mutarotation temperature of about 110°C, of 120°C, of 140°C or even of about 160°C is possible in the method. However, under normal conditions the mutarotation temperature is contemplated to be from 40°C to 100°C, more preferably from 50°C to 90°C and most preferably from 60°C to 80°C.

The heater (120) for heating the mentioned first volume from the crystallization temperature, T_{cryst}, to the mutarotation temperature, Tₘᵤₜₐ, is preferably a heat exchanger for continuous operation or a boiler for discontinuous operation.

The cooler (140) for cooling said first volume from the mutarotation temperature, Tₘᵤₜₐ, to the crystallization temperature, T_{cryst}, is preferably a heat exchanger for continuous operation or a cooler for discontinuous operation.

**Table 1 - Solubility and reaction rate parameters for α- and β-lactose**

| Temperature | Ratio β/α at equilibrium | Total lactose solubility | Solubility α-lactose | Solubility β-lactose | Mutarotation rate β -> α [% of maximum in 1 hour] |
|---|---|---|---|---|---|
| [°C] | | [g/100 g H₂0] | [g/100 g H₂0] | [g/100 g H₂0] | |
| 0 | 1.65 | 11.9 | 4.5 | 7.4 | 2.8 |
| 10 | 1.62 | 15.1 | 5.8 | 9.3 | 8.6 |
| 20 | 1.59 | 19.2 | 7.4 | 11.8 | 22.4 |
| 25 | 1.58 | 21.7 | 8.4 | 13.3 | 34.5 |
| 30 | 1.57 | 24.8 | 9.6 | 15.2 | 49.9 |
| 40 | 1.54 | 32.6 | 12.8 | 19.8 | 82.2 |
| 50 | 1.51 | 43.7 | 17.4 | 26.3 | 97.5 |
| 60 | 1.48 | 58.7 | 23.7 | 35.0 | ∼ 100 |
| 70 | 1.45 | 78.2 | 31.9 | 46.3 | ∼ 100 |
| 80 | 1.43 | 104.1 | 42.8 | 61.3 | ∼ 100 |
| 90 | 1.40 | 143.9 | 60.0 | 83.9 | ∼ 100 |
| 100 | 1.33 | 157.7 | 67.7 | 90.0 | ∼ 100 |

The skilled person will know that it is possible to combine two or more of the above process units of the mutarotation loop system (100) without departing from the basic principles of the invention. E.g. the heater (120) and the mutarotation tank (130) could be combined into one element, e.g. a boiler or a heat exchanger with a holding unit, and also the cooler (140) could be combined into this sequence, e.g. as a mutarotation tank (130) and a cooler (140), or a cooler (140) and a crystallization tank (110), or a heat exchanger or boiler capable of heating, holding and cooling. The mere fact that a single process unit may perform one or several of the process steps associated with the mutarotation loop does not change the nature of the method. Rather it reduces equipment footprint and is beneficial.

In order to initiate operation of the mutarotation loop, the crystallization tank (110) is filled with the aqueous solution comprising dissolved α-lactose and β-lactose and crystallization is allowed to commence.

The total volume of the system can be larger or identical to the sum of the first volume plus the volume of the second volume. If the mutarotation loop is operated in a discontinuous manner a plurality of first volumes are conceivable and the total system volume is then larger or identical to the sum of all first volumes and the second volume contained in the crystallization tank (110).

For some purposes, e.g. to influence the size of the lactose crystals after the crystallization has been completed, it will be beneficial to add seed crystals of α-lactose monohydrate to the aqueous solution in the crystallizing tank (110) in order to promote crystal formation. The more seed crystals are added or prepared in the crystallization tank the smaller the crystals will be at the end of the crystallization process.

If seeded, α-lactose monohydrate is added in an amount from 0.01% to 1.0% weight/weight based on the total weight of lactose within the mutarotation loop system (100), preferably 0.1% weight/weight of α-lactose monohydrate based on the total weight of lactose within the mutarotation loop system (100).

Seed crystals can either be added as already formed small crystals e.g. grinded lactose crystals or they can be formed by cooling the supersaturated lactose comprising solution rapidly to increase the supersaturation level substantially, e.g. to more than 2.1 times the level of saturation. In this way very small crystals will be formed spontaneously. The bigger the temperature drop is during cooling, the more seed crystals are made and the smaller the final crystals will be. Similarly the more of the lactose solution volume that is rapidly cooled the more seed crystals are made and the smaller the final crystals will be.

It is therefore contemplated that seed crystals can be added or created according to the below exemplary principles without the invention being restricted thereby.

In one embodiment seed crystals are prepared in a flash cooling unit comprised in a crystallization system comprising said mutarotation loop system, wherein a volume of an aqueous solution comprising lactose to be crystallized is flash cooled to a temperature where the desired amount of seed crystals is formed in the flash cooler. During addition of the aqueous solution comprising lactose to the crystallization tank (100); the tank will be preheated to approximate the same temperature as the flash cooler, thereby generating the desired amount of crystals in the flash cooler.

In a second embodiment the crystallization tank (100) is cooled to a supersaturation temperature sufficient for obtaining spontaneous crystallization upon filling with an aqueous solution comprising lactose. Thereby a part of the volume of the aqueous solution comprising lactose is cooled down rapidly especially in the beginning until the crystallization tank (100) and lactose solution in the tank is heated up. The temperature chosen and design of the crystallization tank will determine the number of seed crystals formed. The colder the tank the more crystals are formed; the more mass of the tank that needs to be heated up by the lactose solution the more seed crystals are formed, but also the higher the supersaturation of the lactose solution before entering the tank the more seed crystals are formed.

In a third embodiment, dry grinded lactose powder is added to the crystallization tank (100), while filling it with supersaturated lactose solution. The higher the amount of crystals that is added, the smaller the final crystals will be after the crystallization process is completed.

Once the system initiation is complete; crystallization of α-lactose will take place if the aqueous solution in the crystallization tank is supersaturated with α-lactose (cf. Figure 1). In the crystallization tank (110) mutarotation from β-lactose to α-lactose will be slow due to the operating temperature of the crystallization tank (110) and the crystallization process will soon become mutarotation rate limited and operation of the mutarotation loop becomes beneficial. An operator of the mutarotation loop may however initiate the mutarotation loop already from the onset of crystallization in the crystallization tank (110) if so desired.

Operation of the mutarotation loop involves circulation of the aforementioned first volume of the aqueous solution comprising dissolved α-lactose and β-lactose through the aforementioned heater (120), mutarotation tank (130) and cooler (140) upon which it is returned to the aforementioned crystallization tank (140). The first volume can be removed in a single discontinuous step and the volume of the first volume then corresponds to the volume removed. However, under normal operation conditions the mutarotation loop is operated continuously and the first volume then corresponds to the total volume of mutarotation loop system (100) minus the aforementioned second volume contained in the crystallization tank (110).

It is contemplated in an embodiment of the method according to the invention that the aforementioned first volume is retained in the mutarotation tank (130) for a mutarotation time, τₘᵤₜₐ, of less than about 1 hour; and (independently) retained in said crystallization tank (110) for a retention time, τ_{cryst}, of less than about 32 hours; and (independently) retained in said heater (120) for a heating time, τₕₑₐₜ, of less than about 30 minutes; and (independently) retained in said cooler (140) for a cooling time, τ_{cool}, for less than about 30 minutes. These retention time intervals are independently variable.

If a first volume is retained in the mutarotation loop comprising heater (120), mutarotation tank (130), and cooler (140) for the maximum contemplated time of 2 hours then even at 30°C about 75% of all β-lactose available for mutarotation into α-lactose will have mutarotated as according to Table 1. Nevertheless the mutarotation loop is most efficiently operated when the aforementioned first volume is retained in the mutarotation loop for less than two hours but at a higher temperature as given above in Table 1.

Table 2 shows a series of results for a retention time, τₘᵤₜₐ, of 6 minutes in the mutarotation tank (130) at 50°C, 60°C and 70°C respectively. Even at such short mutarotation times, the supersaturation of α-lactose in the volume returning to the crystallization tank will increase from a starting point of 115% supersaturation to 122%, 129%, and 137%, respectively, once the aforementioned first volume is reunited with the aforementioned second volume in the crystallization tank (140) after having completed a circulation of the aforementioned mutarotation loop. After mixing with the volume in the crystallization tank, the supersaturation of α-lactose in the crystallization tank will increase from the 115% to a higher level depending e.g. on the circulation flow compared to the tank volume.

It is accordingly contemplated to use a maximum mutarotation loop time of 2 hours, the maximum mutarotation loop time being the sum of the heating time, τₕₑₐₜ, the mutarotation time, τₘᵤₜₐ, and the cooling time, τ_{cool}. Preferably, the maximum mutarotation loop time is less than 2 hours, less than 1 hour, less than 45 minutes, less than 30 minutes, or less than 20 minutes. Even more preferable, the maximum mutarotation loop time is less than 15 minutes, less than 12 minutes, less than 10 minutes, less than 8 minutes, less than 5 minutes, or less than 3. In some cases, mutarotation times down to even 1 minute is possible e.g. in order to prevent that the viscosity of the crystallization tank raises to unwanted levels or to prevent a filtrate volume in the loop from becoming excessively large.

In the example shown in Figure 1, the maximum mutarotation loop time is from less than 3 minutes to less than 12 minutes. In general, it is preferable that heating and cooling are fast processes compared to the mutarotation time in order to use as much of the maximum mutarotation time the aforementioned first volume spends in the mutarotation loop for mutarotation at the highest temperature of the mutarotation loop.

The retention time in the heater (120), τₕₑₐₜ, is contemplated to be below 30 minutes, below 15 minutes, below 10 minutes, or more preferably below 5 minutes. Most preferably, the retention time in the heater (120), τₕₑₐₜ, is below 4 minutes, below 3 minutes, below 2 minutes, or below 1 minute.

The retention time in the cooler (140), τ_{cool}, is contemplated to be below 30 minutes, below 15 minutes, below 10 minutes, or more preferably below 5 minutes. Most preferably, the retention time in the cooler (140), τ_{cool}, is below 4 minutes, below 3 minutes, below 2 minutes, or below 1 minute.

**Table 2: Concentration vs. solubility for different loop temperatures at a retention time in the mutarotation tank of 6 minutes and with 15°C in the crystallization tank.**

| | | | | |
|---|---|---|---|---|
| 70°C in loop with retention time of 6 min: | | | | |
| Ratio β/α at equilibrium = 1.46 | | | | |
| Mutarotation will become approx. 80% complete | | | | |

| | 15°C Cryst. tank | 70°C inlet loop | 70°C outlet loop | 15°C Inlet Cryst. tank |
|---|---|---|---|---|
| C_{α}(l) g/100g water | 7.5 115% of sol. | 7.5 23% of sol. | 9.0 28% of sol. | 9.0 137% of sol. |
| C_{β}(l) g/100g water | 15.5 147% of sol. | 15.5 33% of sol. | 14.0 30% of sol. | 14.0 133% of sol. |
| | | | | |
| 60°C in loop with retention time of 6 min: | | | | |
| Ratio β/α at equilibrium = 1.48 | | | | |
| Mutarotation will become approx. 55% complete | | | | |

| | 15°C Cryst. tank | 60°C inlet loop | 60°C outlet loop | 15°C Inlet Cryst. tank |
|---|---|---|---|---|
| C_{α}(l) g/100g water | 7.5 115% of sol. | 7.5 32% of sol. | 8.5 36% of sol. | 8.5 129% of sol. |
| C_{β}(l) g/100g water | 15.5 147% of sol. | 15.5 44% of sol. | 14.5 42% of sol. | 14.5 138% of sol. |
| | | | | |
| 50°C in loop with retention time of 6 min: | | | | |
| Ratio β/α at equilibrium = 1.51 | | | | |
| Mutarotation will become approx. 31% complete | | | | |

| | 15°C Cryst. tank | 50°C inlet loop | 50°C outlet loop | 15°C Inlet Cryst. tank |
|---|---|---|---|---|
| C_{α}(l) g/100g water | 7.5 115% of sol. | 7.5 43% of sol. | 8.0 46% of sol. | 8.0 122% of sol. |
| C_{β}(l) g/100g water | 15.5 147% of sol. | 15.5 59% of sol. | 15.0 57% of sol. | 15.0 143% of sol. |

The mutarotation time, τₘᵤₜₐ, in the mutarotation tank (130) is contemplated to be below 1 hour, below 45 minutes, below 30 minutes, below 15 minutes, or below 12 minutes. More preferably, the mutarotation time, τₘᵤₜₐ, is below 10 minutes, below 9 minutes, below 8 minutes, below 7 minutes, below 6 minutes or below 5 minutes.

The crystallization time in the crystallization tank (110), τ_{cryst}, is generally contemplated to be below 32 hours, 28 hours or 24 hours. More preferably the crystallization time, τ_{cryst}, is below 20 hours, below 18 hours or below 16 hours. However, as the crystallization tank (110) is operated independently of the mutarotation loop, the skilled person will know to vary the crystallization time, τ_{cryst}, according to the known teachings of the art of crystallizing α-lactose from an aqueous solution comprising dissolved α-lactose and β-lactose.

In an embodiment of the method according to the invention, the aforementioned first volume is circulated in the mutarotation loop system (100) at a circulation rate of the aforementioned first volume in the aforementioned mutarotation loop system (100) from 15 to 400 volume % per hour of the aforementioned second volume. Preferably, the circulation rate is between 25 to 200 volume %, between 35 to 150 volume %, or between 40 to 125 volume %. Most preferably, the circulation rate is between 50 to 100 volume %. All volume percentages based on fraction of first volume flow rate to second volume.

In Table 3 three examples of the operating parameters and their combinations are given, showing how the crystallization time is influenced by the maximum retention time in the mutarotation loop.

**Table 3: Examples of possible operation parameters for the mutarotation loop.**

| Opearting Parameter | Example 1 | Example 2 | Example 3 |
|---|---|---|---|
| Temperature in mutarotation tank (130) | 30°C - 110°C | 40°C - 100°C | 50°C - 90°C |
| Temperature in crystallization tank (110) | 0°C - 30°C | 5°C - 25°C | 5°C - 15°C |
| Retention time in heater (120), τₕₑₐₜ | < 30 minutes | < 5 minutes | < 1 minutes |
| Retention time in cooler (140), τ_{cool} | < 30 minutes | < 5 minutes | < 1 minutes |
| Retention time in crystallization tank (110), τ_{cryst} | < 32 hours | < 28 hours | < 24 hours |
| Retention time in mutarotation tank (130), τₕₑₐₜ | < 1 hour | < 30 minutes | < 10 minutes |
| Circulation flow in mutarotation loop | 15 - 400 | 25 - 200 | 50 - 100 |
| | volume % | volume % | volume % |

In an embodiment of the method according to the invention, crystallized α-lactose formed in the aforementioned crystallizing tank (110) is removed continuously, or discontinuously, from the mutarotation loop system (100). This separation can be done by use of sedimentation, centrifugation, hydrocyclone separation, membrane filtration, or other crystal separation means (160) .

To this purpose, the mutarotation loop system (100) may further comprise crystal separation means (160) such as a centrifuge, a hydrocyclone, membrane filters, or other crystal separation means known to the skilled person. As the crystal separation means (160) are operated independently of the mutarotation loop the skilled person will know how to select crystal separation means suitable for the desired purpose based on the general art of separating lactose crystals from solutions. Particularly preferred is separation by hydrocyclone separation which will allow undersized crystals to be retained in the mutarotation loop system (100) for dissolving, so that the lactose is released for growth on crystals of the desired size. Especially very small new crystal seeds, which may have formed during the process, can be eliminated, while their individual mass is still very low.

In an embodiment of the method according to the invention a third volume of aqueous solution which has been depleted of lactose is removed from the mutarotation loop system (100) and replaced by an equal volume enriched in lactose. By simultaneously adding and removing equal or approximately equal amounts of liquid from the mutarotation system (100), the system is enabled to operate continuously while maintaining iso-volumetric conditions.

Removing the aforementioned third volume could be done by evaporation or reverse osmosis, which however will lead to a build-up of salts and impurities and is not preferred. Rather, in order to avoid a build-up of salts and impurities while at the same time retaining as much lactose as possible in the mutarotation loop system (100), impurity removing methods such as nanofiltration, electro dialysis, or the like, are contemplated.

Accordingly, the mutarotation loop system (100) of the invention may further comprise liquid removing means (170), preferably impurity removing means (180) such as ultrafilters, or the like; connected to appropriate conduits for transporting the aforementioned third volume away from the mutarotation loop system (100). As the liquid removing means are operated independently of the mutarotation loop, the skilled person will know to choose suitable liquid removing means based on the relevant knowledge in the art of removing liquids depleted or nearly depleted of lactose from an aqueous solution comprising lactose.

When the mutarotation loop system (100) of the invention comprises liquid removing means, it shall also comprise liquid adding means (190) preferably in the form of a liquid conduit adapted for transporting a volume of liquid comprising dissolved α-lactose and β-lactose from a reservoir external to the mutarotation loop system (100) and into the mutarotation loop system. As the liquid adding means are operated independently of the mutarotation loop, the skilled person will know to choose suitable liquid adding means based on the relevant knowledge in the art of adding liquids comprising lactose to a close loop system.

In a further embodiment, the mutarotation loop system (100) of the invention further comprises measuring means (200) for measuring independently the concentration of α-lactose and β-lactose at the inlet to and the outlet from said mutarotation loop.

In a further embodiment of the invention, it is contemplated that said mutarotation loop system (100) comprises a plurality of crystallization tanks (110) each sharing the same mutarotation loop. Thereby footprint and factory space is saved.

As detailed above, the method of crystallization α-lactose monohydrate according to the present invention is also a method of increasing a yield of crystallized α-lactose monohydrate; and/or a method of increasing a crystallization rate for crystallizing α-lactose monohydrate; and/or a method of increasing crystal quality of crystallized α-lactose monohydrate; and/or a method of increasing crystal size homogeneity of crystallized α-lactose monohydrate; and/or a method of controlling the supersaturation level in a crystallization tank during α-lactose monohydrate crystallization.

Depending on the process parameters chosen, the skilled person may obtain one of the above benefits or a combination of the above benefits when crystallizing α-lactose monohydrate from an aqueous solution according to the present invention. Below are given examples of these benefits, both as individual benefits and as combined benefits.

### EXAMPLES

### Example 4 - Proof of Concept:

This test was done to show proof of concept of the mutarotation loop crystallization. Preparing this test in lab scale using standard laboratory equipment meant that the formation of initial crystals was poorly under control. However using a reference crystallization which experienced the same conditions as the alternating crystallization except for the specific handling of samples used for the alternating temperature treatment made it possible to look at the difference between two crystallization tanks and relate this to the mutarotation loop method of the invention.

Method:
a) 114 g of lactose anhydrate per 100 g of ion exchanged water was dissolved by heating it up to boiling point yielding a final concentration of 53 % by total weight.
b) Start of experiments 9.00 am.
c) The solution was split into 2 preheated blue cap bottles when the temperature was approx. 75°C and inoculated with grinded lactose monohydrate crystals at a level of 0,1% of lactose solution (w/w).
d) The bottles were air-cooled until a temperature of approx. 40°C was reached. During the cooling the bottles were regularly shaken rigorously.
e) Solution from each bottle was transferred into identical beakers (for a total of one test and one reference sample) and placed in the same water bath at 40°C. Each beaker with mechanical agitation using same agitator at a speed of 75 rpm.
f) The temperature in the water bath was lowered approx. 12°C per hour until a temperature of 15°C was reached.
g) Upon reaching a temperature of 15°C a mutarotation loop cycle was initiated, while continuing to cool the samples to first 10°C and finally to 5°C.
h) For the mutarotation loop, the agitation was stopped every 30 minutes in both beakers. After settling of any formed crystals, two samples were taken from the clear phase of the beaker simulating mutarotation loop crystallization. Each sample was transferred into a centrifugal glass, (centrifugation for 2 min at 1100 rpm), after which the crystal free supernatant was transferred into 2 centrifugal glasses, which were placed in a water bath at 80-90°C for approx. 5 min. Hereafter the solutions were cooled in a water bath at 10°C for 5-10 min and transferred back into the centrifugal glasses containing the crystal concentrate. Solution and crystals were mixed before being transferred back into the crystallization beaker thereby simulating a mutarotation loop.
i) Every hour a small sample of the clear phase was taken from each crystallization beaker. These samples were measured on a refractometer.
j) End of experiment 8.50 pm.
k) On the last sample of the test a bigger sample was taken and this was tested in duplicate for dry matter by drying at 102°C for 4 hours.
l) The degree of crystallization was calculated based on the decline of dry matter in the solution according to %cryst = (TS0-TSc)/(0,95-TSc) * 0,95/TS0 * 100% with TS0 being the initial concentration and TSc the measured dry matter of step k).

The results of the proof of concept experiment are reported in Figure 3 (Brix measurements) and in Table 4.

**Table 4: Dry matter remaining after crystallization in % of sampled weight.**

| Sample | Dry matter (102°C /4 hours) in % | Average Dry Matter in % |
|---|---|---|
| Mutarotation 1 | 20.6 | |
| Mutarotation 2 | 20.6 | 20.6 |
| Reference 1 | 21.5 | |
| Reference 2 | 21.3 | 21.4 |

As can be seen from Figure 3 and from Table 4, the application of a mutarotation loop to the crystallization process was successful in influencing both crystallization rate (increase) and crystallization yield (increase).

### Example 5 - Accelerated Mutarotation:

The feasibility of speeding up the crystallization of α-lactose by using alternating temperature during the crystallization process was explored in 2 different approaches:
In a first approach the crystallization took place in 2 tanks operating at different temperatures with the tank with the higher temperature favoring mutarotation. The mutarotation coefficient can be increased by a factor of 4-8 in a solution with a concentration of 1.6 times the solubility, by heating it up to the temperature corresponding to the solubility point. In a solution with 30 g lactose per 100 g water the mutarotation coefficient is approx. 6 times higher at 37°C (total saturation, Ts) compared to at 19°C (1.6 x solution), reflecting that the same degree of complete mutarotation is reached 6 times faster at 37°C compared to at 19°C, cf. Figure 4.

In a second approach the crystallization took place in only 1 tank, but the slurry was circulated over a centrifuge/hydrocyclone/Micro Filter (MF) or by use of a simple separation by gravity through a specially designed extraction device. The permeate was heated up to e.g. 70°C and passed through a holding cell of 3 min. before being cooled down again and returning to the crystallization tank, cf. Figure 4.

This ensured that 50-80% of the mutarotation was completed in the loop. The mutarotation step is boosted due to the high temperature in the loop and the crystallization step is boosted by increased supersaturation of α-lactose in the crystallization tank (110). This approach will boost the overall crystallization speed whether the limiting factor is the mutarotation step or the crystallization step, however the benefit is bigger the smaller the crystals are, since this will push the limiting factor towards the mutarotation step. If the crystallization tank (110) is operating at 10°C, then the mutarotation speed in the loop is increased approx. 160 times, which even with moderate circulation flow over the loop will have a very big impact on the overall mutarotation speed.

In a lactose process this approach can be used to reduce crystallization time and/or increase lactose yield. In a non-caking whey permeate process the benefit of the increase availability of α-lactose is considered sufficient for only having 1 crystallization tank with a mutarotation loop, running as a continuous process.

Additional benefits of using approach 2:
a) Since the equilibrium between α- and β-lactose is temperature dependent with higher ratio of α-lactose at higher temperature, then using the second approach with one tank crystallizing at 10°C and mutarotating at 70°C in the loop will increase the yield in the lactose process, corresponding to 0,9 g extra α-lactose per 100 g water.
b) If the increased rate of crystallization is used to reduce the temperature of the crystallization rather than reducing the time of the crystallization process, then the yield in the lactose process will be increased significantly, corresponding to 4,1 g extra lactose per 100 g water, if temperature is reduced from 15°C to 10°C. This effect is accumulative with the extra yield described in a).
c) In approach 2 with one crystallization tank (110) and a mutarotation loop, there is an additional benefit that any new crystal seeds created during the crystallization process will pass the crystal separating means (160), e.g. the hydro cyclone, and be eliminated in the mutarotation tank (130). This will thus lead to a more uniform size distribution of the crystals which will be beneficial in the separation and drying step of the process, and in this way give higher yield.

### Example 6 - Control of crystal size:

During the lactose crystallization process new seeds may be created due to e.g. mechanical stress to the crystals. These new seeds will broaden the size distribution of the lactose crystals. This is undesirable because small crystals will be lost to the mother liquor in the following separation and washing steps exterior to the mutarotation loop.

However, during the crystallization process the lactose crystal suspension can be separated in a crystal separating means (160) into 2 fractions; one faction with all crystals bigger than the cutoff of the separation method, and another fraction with only crystals below the cutoff of the separation method. If the fraction with the crystals below the cutoff of the separation method are transferred to the mutarotation loop and heated up to e.g. 70°C, at which point the solubility of α-lactose is high (32 g per 100 g of water), the crystals in this fraction will easily dissolve before the fraction reenters the crystallization tank (110) where the α-lactose will now be solubilized and available for crystal formation with crystals of an appropriate size.

In this way it is possible to kill small crystals created during the crystallization process, and re-crystallize them onto crystals of a bigger size.

### Example 7 - Improved purity of lactose crystals:

During the lactose crystallization process impurities will to a small degree be incorporated into the matrix of the α-lactose monohydrate crystals. This is undesirable since these impurities will not be removed in a subsequent crystals' washing step. This can have as a consequence that a desired level of purity may not be obtained or that the crystal loss to obtain this desired level of purity will be high in an ensuing washing step due to the need for extensive washing. Impurities incorporated into the crystal matrix will also slow down the crystallization step in the crystallization tank (110), where α-lactose molecules are attaching onto the surfaces of the forming crystals.

The amount of impurities incorporated depends on the level of impurities in the solution and the supersaturation level of the α-lactose in the aqueous solution contained in the crystallization tank (110).

By using the mutarotation loop method of the present invention it is possible to increase the supersaturation level of α-lactose, which will improve purity of the lactose crystals. The temperature of crystallization can also be lowered faster and to a lower endpoint in the crystallization tank (110), thereby maintaining a high supersaturation level throughout the crystallization process, as the method of the invention will counteract the slow mutarotation, which would normally be the consequence of operating with this temperature profile.

The purity can also be improved in a normal manner by removing any impurities during the crystallization process. This can easily be done without adding mechanical stress to the crystals by placing impurity separating means (180) in the mutarotation loop.

### Example 8 - Control of supersaturation level:

If the supersaturation level of α-lactose becomes too high, uncontrolled crystallization will occur in the crystallization tank (110) resulting in reduced purity with less uniform size distribution of the crystals. Accordingly, it is important to be able to control the level of supersaturation. This can be done by estimating the concentration of α-lactose based on online measurements e.g. by measuring the α-lactose concentration at the inlet to the mutarotation loop and at the outlet from the mutarotation loop.

These results can then be compared to the saturation level of α-lactose at the relevant temperature to give the level of supersaturation. If the total lactose concentration or β-lactose concentration is also measured, then the ratio between β-lactose and α-lactose can be calculated. The higher this ratio is compared to the equilibrium ratio at the crystallization temperature in the crystallization tank (110), the more the mutarotation is limiting the speed of the crystallization process, and the bigger the benefit is of using the mutarotation loop method of the invention.

The measurements can e.g. be made by measuring temperature, Brix and polar rotation.

If e.g. the supersaturation level in the crystallization tank (110) is below target, then cooling of the crystallization tank (110) can be increased, which will accelerate the decrease of the saturation level of α-lactose and thus increase the supersaturation level. If the supersaturation level in the crystallization tank (110) is above target, then the cooling of the crystallization tank is decreased, which will slow down the decrease of the saturation level. When the β/α ratio become higher than desired, activating the mutarotation loop will move the ratio closer to the equilibrium ratio.

The flow, temperature and holding time in the mutarotation loop will determine the capacity of the accelerated mutarotation speed. To be able to run the circulation flow as close to the maximum as possible, the optional crystal separation means (160) should be continuously monitored. E.g. if a simple separation by gravitation is used, then monitoring of the crystal level will help determine the maximum flow through the crystal separation means (160) which do not give undesired loss of crystals. This maximum flow will depend on crystal size, viscosity etc. so the circulation flow will not necessarily be the same throughout the crystallization process.

### Example 9 - Controlled zone of high α-lactose concentration:

During the lactose crystallization process the α-lactose concentration in the crystallization tank (110) on a macrolevel will normally be fairly uniform at any given time when using the method of the present invention. Efficient agitation will often be used to ensure on a microlevel that the α-lactose in solution comes into good contact with the surface of the evolving crystals.

If it is desired to create a zone in the crystallization tank (100) where the concentration of α-lactose is significantly higher than the rest of the crystallization tank, then this is possible by using the mutarotation loop of the present invention. After cooling α-lactose comprising solution enriched in α-lactose is added back into the crystallization tank (110). Locally near the inlet, the concentration of α-lactose will be higher than in the rest of the crystallization tank. This effect can be enhanced by creating a local zone in the crystallization tank (110) where mixing with the rest of the tank is restricted and by adding the α-lactose enriched solution to this zone of the crystallization tank (110).

As an example a supersaturated solution at 10°C containing 7.5 g α-lactose per 100 g water and 15 g β-lactose per 100 g water was heated up to 70°C and maintained at this temperature for 5 min. At this point 74% of the β-lactose not in equilibrium will have mutarotated, giving an α-lactose concentration of 8.76 g per 100 g water. The bulk of the crystallization tank (110) will have an α-lactose concentration of 7.5 g per 100 g water. At the same temperature of 10°C this corresponds to supersaturation level of 1.29 in the bulk and 1.51 in the returning α-lactose rich solution. In the zone the supersaturation level will be somewhere between these two values, amongst others depending on the speed of mixing between zone and bulk. In an extreme case where the bulk was far from equilibrium, the supersaturation level would reach a very high level of 2.1. This however is undesirable since spontaneous nucleation most likely occurs. This could however be controlled by increasing the temperature of the returning α-lactose rich solution, so that the temperature in the zone also was increased enough to bring the supersaturation level down to e.g. 1.6 where spontaneous crystallization does not occur.

If the desired level of supersaturation in the crystallization tank (110) is high, then the supersaturation level resulting from applying the mutarotation loop will be even higher. This will make it critical so get the return mixed in without uncontrolled formation of new crystals. One approach to do this could be to keep the temperature of the return higher than the temperature in the crystallization tank. This will keep the super saturation level lower until the point of mixing with the cold slurry in the tank. The mix will happen simultaneously with the cooling of the return solution, and by ensuring a good mixing at the point of entry, uncontrolled formation of new crystals can be reduced or avoided.

The term "comprising" as used in the claims does not exclude other elements or steps. The term "a" or "an" as used in the claims does not exclude a plurality. A single processor or other unit may fulfill the functions of several means recited in the claims. It shall be understood that all process units detailed herein are connected, where necessary, by appropriate conduits for transporting liquids.

Although the present invention has been described in detail for purpose of illustration, it is understood that such detail is solely for that purpose, and variations can be made therein by those skilled in the art without departing from the scope of the invention.

## Claims

1. A method of crystallizing α-lactose monohydrate from an aqueous solution comprising dissolved α-lactose and β-lactose, said method comprising:
circulating a first volume of said aqueous solution in a mutarotation loop in a mutarotation loop system (100); said mutarotation loop system comprising:
- a crystallization tank (110) operating at a crystallization temperature, T_{cryst}, from 0°C to 30°C for crystallizing α-lactose monohydrate from said aqueous solution, said crystallization tank comprising a second volume of said aqueous solution, said second volume larger than said first volume, preferably much larger than said first volume;
- a mutarotation tank (130) operating at a mutarotation temperature, Tₘᵤₜₐ, from 30°C to 110°C for promoting mutarotation of β-lactose to α-lactose;
- a heater (120) for heating said first volume from said crystallization temperature, T_{cryst}, to said mutarotation temperature, Tₘᵤₜₐ;
- a cooler (140) for cooling said first volume from said mutarotation temperature, Tₘᵤₜₐ, to said crystallization temperature, T_{cryst}; and
- at least one circulating means (150) for circulating said first volume in said mutarotation loop system (100) from said crystallization tank (110) to said heater (120) to said mutarotation tank (130) to said cooler (140) and back to said crystallization tank (110);
wherein
- said mutarotation tank (130) is operated under iso-volumetric conditions; and
- said first volume is retained in said mutarotation tank (130) for a mutarotation time, τₘᵤₜₐ, of less than 1 hour.

2. The method of claim 1 wherein said first volume is
- retained in said crystallization tank (110) for a retention time, τ_{cryst}, of less than 32 hours;
- retained in said heater (120) for a heating time, τₕₑₐₜ, of less than 30 minutes;
- retained in said cooler (140) for a cooling time, τ_{cool}, for less than 30 minutes; and
wherein said retention time, τ_{cryst}, said heating time, τₕₑₐₜ, and said cooling time, τ_{cool}, are independently variable.

3. The method of either claim 1 or claim 2, wherein seed crystals of α-lactose monohydrate is added to said second volume of said aqueous solution in said crystallizing tank (110).

4. The method of claim 1 wherein said first volume is circulated in said mutarotation loop system (100) at a circulation rate of said first volume in said mutarotation loop system (100) from 15 to 400 volume % per hour of said second volume.

5. The method according to any of the claims 1 to 4 wherein a third volume of said aqueous solution depleted of lactose is removed from said mutarotation loop system (100) and replaced by an equal volume enriched in lactose.

6. The method of claim 5 wherein said third volume is removed by filtration, preferably by nanofiltration.

7. The method of any of the claims 1 to 6 wherein heating and mutarotation, or heating and mutarotation and cooling, or mutarotation and cooling, is executed in a single process unit, preferably in a single heat exchanger.

8. The method of any of the claims 1 to 7 wherein cooling and crystallization is executed in a single process unit, preferably in a single crystallization tank.

9. The method of any of the claims 1 to 8, wherein said method of crystallization α-lactose monohydrate is a method of increasing a yield of crystallized α-lactose monohydrate, and/or a method of increasing a crystallization rate for crystallizing α-lactose monohydrate, and/or a method of increasing crystal quality of crystallized α-lactose monohydrate, and/or a method of increasing crystal size homogeneity of crystallized α-lactose monohydrate.

10. A mutarotation loop system (100) comprising
- a crystallization tank (110),
- a mutarotation tank (130),
- a heater (120),
- a cooler (140),
- at least one circulating means (150) for circulating an aqueous solution comprising α-lactose and β-lactose in said mutarotation loop system (100); and
- a controller configured for executing a method according to any of the claims 1 to 9.

11. The mutarotation loop system (100) of claim 10, wherein either said heater (120) and said mutarotation tank (130), or said heater (120) and said mutarotation tank (140) and said cooler (140), is a single process unit, preferably a single heat exchanger.

12. The mutarotation loop system (100) of claim 10 wherein said crystallizing tank (110) and said cooler (140) is a single process unit, preferably a single crystallization tank.

13. The mutarotation loop system (100) of claim 2-12 wherein said heater (120) and said mutarotation tank (130) is a single process unit, preferably a single heat exchanger.

14. The mutarotation loop system (100) of any of the claims 10 to 13 further comprising crystal separation means (160), preferably a centrifuge, a hydrocyclone, and/or membrane filters, in particular microfiltration filters.

15. The mutarotation loop system (100) of any of the claims 10 to 14 further comprising liquid removing means (170), preferably a nanofilter (180), and liquid adding means (190).

## Patentansprüche

1. Verfahren zum Kristallisieren eines α-Lactosemonohydrats aus einer wässrigen Lösung, die gelöste α-Lactose und β-Lactose umfasst, wobei das Verfahren umfasst:
Zirkulierenlassen eines ersten Volumens der wässrigen Lösung in einer Mutarotationsschleife in einem Mutarotationsschleifensystem (100); wobei das Mutarotationsschleifensystem umfasst:
- einen Kristallisationsbehälter (110), der zum Kristallisieren von α-Lactosemonohydrat aus der wässrigen Lösung bei einer Kristallisationstemperatur, T_{cryst}, von 0 °C bis 30 °C betrieben wird, wobei der Kristallisationsbehälter ein zweites Volumen der wässrigen Lösung umfasst, wobei das zweite Volumen größer als das erste Volumen ist, bevorzugt viel größer als das erste Volumen ist;
- einen Mutarotationsbehälter (130), der zum Fördern der Mutarotation von β-Lactose zu α-Lactose bei einer Mutarotationstemperatur, Tₘᵤₜₐ, von 30 °C bis 110 °C betrieben wird;
- eine Heizvorrichtung (120) zum Erhitzen des ersten Volumens von der Kristallisationstemperatur, T_{cryst}, auf die Mutarotationstemperatur, Tₘᵤₜₐ;
- eine Kühlvorrichtung (140) zum Kühlen des ersten Volumens von der Mutarotationstemperatur, Tₘᵤₜₐ, auf die Kristallisationstemperatur, T_{cryst}; und
- mindestens ein Zirkulierungsmittel (150) zum Zirkulierenlassen des ersten Volumens in dem Mutarotationsschleifensystem (100) von dem Kristallisationsbehälter (110) zu der Heizvorrichtung (120) zu dem Mutarotationsbehälter (130) zu der Kühlvorrichtung (140) und zurück zu dem Kristallisationsbehälter (110);
wobei
- der Mutarotationsbehälter (130) unter isovolumetrischen Bedingungen betrieben wird; und
- das erste Volumen während einer Mutarotationszeit, τₘᵤₜₐ, von weniger als 1 Stunde in dem Mutarotationsbehälter (130) verweilen lassen wird.

2. Verfahren nach Anspruch 1, wobei das erste Volumen
- während einer Verweilzeit, τ_{cryst}, von weniger als 32 Stunden in dem Kristallisationsbehälter (110) verweilen lassen wird;
- während einer Heizzeit, τₕₑₐₜ, von weniger als 30 Minuten in der Heizvorrichtung (120) verweilen lassen wird;
- während einer Kühlzeit, τ_{cool}, von weniger als 30 Minuten in der Kühlvorrichtung (140) verweilen lassen wird; und
wobei die Verweilzeit, τ_{cryst}, die Heizzeit, τₕₑₐₜ, und die Kühlzeit, τ_{cool}, unabhängig variierbar sind.

3. Verfahren nach entweder Anspruch 1 oder 2, wobei dem zweiten Volumen der wässrigen Lösung in dem Kristallisationsbehälter (110) Keimkristalle von α-Lactosemonohydrat zugegeben werden.

4. Verfahren nach Anspruch 1, wobei das erste Volumen in dem Mutarotationsschleifensystem (100) mit einer Zirkulationsgeschwindigkeit des ersten Volumens in dem Mutarotationsschleifensystem (100) von 15 bis 400 Volumen-% pro Stunde des zweiten Volumens zirkulieren lassen wird.

5. Verfahren nach einem der Ansprüche 1 bis 4, wobei ein drittes Volumen der wässrigen Lösung, das an Lactose abgereichert ist, aus dem Mutarotationsschleifensystem (100) entfernt und durch ein gleiches Volumen, das an Lactose angereichert ist, ersetzt wird.

6. Verfahren nach Anspruch 5, wobei das dritte Volumen durch Filtration, bevorzugt durch Nanofiltration, entfernt wird.

7. Verfahren nach einem der Ansprüche 1 bis 6, wobei Erhitzen und Mutarotation oder Erhitzen und Mutarotation und Kühlen oder Mutarotation und Kühlen in einer einzigen Verfahrenseinheit, bevorzugt in einem einzigen Wärmetauscher, durchgeführt werden.

8. Verfahren nach einem der Ansprüche 1 bis 7, wobei Kühlen und Kristallisation in einer einzigen Verfahrenseinheit, bevorzugt in einem einzigen Kristallisationsbehälter, durchgeführt werden.

9. Verfahren nach einem der Ansprüche 1 bis 8, wobei das Verfahren der Kristallisation von α-Lactosemonohydrat ein Verfahren des Erhöhens einer Ausbeute an kristallisiertem α-Lactosemonohydrat und/oder ein Verfahren des Erhöhens einer Kristallisationsgeschwindigkeit zum Kristallisieren von α-Lactosemonohydrat und/oder ein Verfahren des Erhöhens der Kristallqualität von kristallisiertem α-Lactosemonohydrat und/oder ein Verfahren zum Erhöhen der Einheitlichkeit der Kristallgröße von kristallisiertem α-Lactosemonohydrat ist.

10. Mutarotationsschleifensystem (100), umfassend
- einen Kristallisationsbehälter (110),
- einen Mutarotationsbehälter (130),
- eine Heizvorrichtung (120),
- eine Kühlvorrichtung (140),
- mindestens ein Zirkulationsmittel (150) zum Zirkulierenlassen einer wässrigen Lösung, die α-Lactose und β-Lactose umfasst, in dem Mutarotationsschleifensystem (100); und
- eine Steuerungsvorrichtung, die zum Ausführen eines Verfahrens nach einem der Ansprüche 1 bis 9 ausgestaltet ist.

11. Mutarotationsschleifensystem (100) nach Anspruch 10, wobei entweder die Heizvorrichtung (120) und der Mutarotationsbehälter (130) oder die Heizvorrichtung (120) und der Mutarotationsbehälter (130) und die Kühlvorrichtung (140) eine einzige Verfahrenseinheit, bevorzugt ein einziger Wärmetauscher, sind.

12. Mutarotationsschleifensystem (100) nach Anspruch 10, wobei der Kristallisationsbehälter (110) und die Kühlvorrichtung (140) eine einzige Verfahrenseinheit, bevorzugt ein einziger Kristallisationsbehälter, sind.

13. Mutarotationsschleifensystem (100) nach Anspruch 12, wobei die Heizvorrichtung (120) und der Mutarotationsbehälter (130) eine einzige Verfahrenseinheit, bevorzugt ein einziger Wärmetauscher, sind.

14. Mutarotationsschleifensystem (100) nach einem der Ansprüche 10 bis 13, ferner umfassend Kristalltrennmittel (160), bevorzugt eine Zentrifuge, ein Hydrozyklon und/oder Membranfilter, insbesondere Mikrofiltrationsfilter.

15. Mutarotationsschleifensystem (100) nach einem der Ansprüche 10 bis 14, ferner umfassend Flüssigkeitsentfernungsmittel (170), bevorzugt ein Nanofilter (180), und Flüssigkeitszugabemittel (190).

## Revendications

1. Procédé permettant de cristalliser un monohydrate d'α-lactose à partir d'une solution aqueuse comprenant de l'a-lactose et du β-lactose dissous, ledit procédé comprenant :
mettre en circulation un premier volume de ladite solution aqueuse dans une boucle de mutarotation au sein d'un système de boucle de mutarotation (100) ; ledit système de boucle de mutarotation comprenant :
- un réservoir de cristallisation (110) fonctionnant à une température de cristallisation, T_{cryst}, comprise entre 0 °C et 30 °C destiné à la cristallisation du monohydrate d'a-lactose à partir de ladite solution aqueuse, ledit réservoir de cristallisation comprenant un second volume de ladite solution aqueuse, ledit second volume étant plus important que ledit premier volume, de préférence bien plus important que ledit premier volume ;
- un réservoir de mutarotation (130) fonctionnant une température de mutarotation, Tₘᵤₜₐ, comprise entre 30 °C et 110 °C destiné à promouvoir la mutarotation de l'a-lactose en β-lactose ;
- un chauffage (120) destiné au chauffage dudit premier volume à partir de ladite température de cristallisation, T_{cryst}, à ladite température de mutarotation, Tₘᵤₜₐ;
- un refroidisseur (140) destiné au refroidissement dudit premier volume à partir de ladite température de mutarotation, Tₘᵤₜₐ, à ladite température de cristallisation, T_{cryst} ; et
- au moins un moyen de circulation (150) permettant la circulation dudit premier volume dans ledit système de boucle de mutarotation (100) à partir dudit réservoir de cristallisation (110) audit chauffage (120) audit réservoir de mutarotation (130) audit refroidisseur (140) et de retour audit réservoir de cristallisation (110) ;
dans lequel
- ledit réservoir de mutarotation (130) est mis en fonctionnement dans des conditions iso-volumétriques ; et
- ledit premier volume est retenu dans ledit réservoir de mutarotation (130) pendant un temps de mutarotation, Tₘᵤₜₐ, de moins d'une heure.

2. Procédé selon la revendication 1, dans lequel ledit premier volume est
- retenu dans ledit réservoir de cristallisation (110) pendant un temps de rétention, t_{cryst}, de moins de 32 heures ;
- retenu dans ledit chauffage (120) pendant un temps de chauffage, tₕₑₐₜ, de moins de 30 minutes ;
- retenu dans ledit refroidisseur (140) pendant un temps de refroidissement, t_{cool}, de moins de 30 minutes ; et
dans lequel ledit temps de rétention, t_{cryst}, ledit temps de chauffage, tₕₑₐₜ, et ledit temps de refroidissement, t_{cool}, sont indépendamment variables.

3. Procédé selon la revendication 1 ou la revendication 2, dans lequel des germes de cristal de monohydrate d'α-lactose sont ajoutés audit second volume de ladite solution aqueuse dans ledit réservoir de cristallisation (110).

4. Procédé selon la revendication 1, dans lequel ledit premier volume est mis en circulation dans ledit système de boucle de mutarotation (100) à un taux de circulation dudit premier volume dans ledit système de boucle de mutarotation (100) compris entre 15 et 400 volumes en pourcent par heure dudit second volume.

5. Procédé selon l'une quelconque des revendications 1 à 4, dans lequel un troisième volume de ladite solution aqueuse exempte de lactose est éliminé à partir dudit système de boucle de mutarotation (100) est remplacé par un volume égal enrichi en lactose.

6. Procédé selon la revendication 5, dans lequel ledit troisième volume est éliminé par filtration, de préférence par nanofiltration.

7. Procédé selon l'une quelconque des revendications 1 à 6, dans lequel le chauffage et la mutarotation, ou le chauffage et la mutarotation et le refroidissement, ou la mutarotation et le refroidissement, sont effectués dans une unité de traitement unique, de préférence dans un échangeur de chaleur unique.

8. Procédé selon l'une quelconque des revendications 1 à 7, dans lequel le refroidissement et la cristallisation sont effectués dans une unité de traitement unique, de préférence dans un réservoir de cristallisation unique.

9. Procédé selon l'une quelconque des revendications 1 à 8, dans lequel ledit procédé de cristallisation du monohydrate d'a-lactose consiste en un procédé permettant d'augmenter un rendement de monohydrate d'a-lactose cristallisé, et/ou un procédé permettant d'augmenter un taux de cristallisation pour la cristallisation de monohydrate d'a-lactose, et/ou un procédé permettant d'augmenter la qualité cristalline du monohydrate d'a-lactose cristallisé, et/ou un procédé permettant d'augmenter l'homogénéité de la taille de cristal du monohydrate d'a-lactose cristallisé.

10. Système de boucle de mutarotation (100) comprenant :
- un réservoir de cristallisation (110),
- un réservoir de mutarotation (130),
- un chauffage (120),
- un refroidisseur (140),
- au moins un moyen de circulation (150) permettant de faire circuler une solution aqueuse comprenant de l'a-lactose du β-lactose dans ledit système de boucle de mutarotation (100) ; et
- un dispositif de commande conçu pour exécuter un procédé selon l'une quelconque des revendications 1 à 9.

11. Système de boucle de mutarotation (100) selon la revendication 10, dans lequel soit ledit chauffage (120) et ledit réservoir de mutarotation (130), soit ledit chauffage (120) et ledit réservoir de mutarotation (140) et ledit refroidisseur (140), consistent en une unité de traitement unique, de préférence en un échangeur de chaleur unique.

12. Système de boucle de mutarotation (100) selon la revendication 10, dans lequel ledit réservoir de cristallisation (110) et ledit refroidisseur (140) consistent en une unité de traitement unique, de préférence en un réservoir de cristallisation unique.

13. Système de boucle de mutarotation (100) selon la revendication 12, dans lequel ledit chauffage (120) et ledit réservoir de mutarotation (130) consistent en une unité de traitement unique, de préférence en un échangeur de chaleur unique.

14. Système de boucle de mutarotation (100) l'une quelconque des revendications 10 à 13, comprenant en outre un moyen de séparation de cristal (160), de préférence une centrifugeuse, un hydrocyclone, et/ou des filtres de membrane, en particulier des filtres de microfiltration

15. Système de boucle de mutarotation (100) l'une quelconque des revendications 10 à 14, comprenant en outre un moyen d'élimination de liquide (170), de préférence un nanofiltre (180), et un moyen d'ajout de liquide (190).
